# EUROPEAN PATENT SPECIFICATION

(11) **EP 0 727 190 B1**
(45) Date of publication and mention of the grant of the patent: **28.06.2000**
(21) Application number: 96830064.0
(22) Date of filing: 13.02.1996
(51) Int. Cl.: A61C 1/00, A61C 1/18

(54) **An adapter for dental handpieces**
Zwischenstück für dentales Handstück
Adaptateur pour pièce à main dentaire

(30) Priority: 17.02.1995 IT BO950057
(43) Date of publication of application: 21.08.1996
(73) Proprietor: CASTELLINI S.p.A., 40013 Castel Maggiore (Bologna) (IT)
(72) Inventor: Castellini, Franco, 40123 Bologna (IT)
(74) Representative: Lanzoni, Luciano

(56) References cited:
- EP-A- 0 370 998
- WO-A-95/01136
- FR-A- 2 707 865

## Description

The present invention relates to an adapter for dental handpieces, in particular for those used for surgery in the oral cavity.

WO95/01136 discloses several types of adapters for surgical instruments.

The current dental handpieces are divided into instruments designed for tooth extraction, for example, the turbine and micro-motor, and instruments designed for complementary stages, for example, the syringe or polymerising lamp.

Micro-motors normally consist of a first body which forms the grip of the handpiece and has one end which can be connected to an instrument (e.g.: a burr), whose first body is coaxially connected to a second body containing a motor, by means of a rapid connector at the respective ends. The other end of the second body is, in turn, connected to a terminal for the supply of water or physiological solution, of an air spray, cooling air and electricity for the micro-motor; the terminal is at the end of a cable which leaves a handpiece support tablet on a dental unit where the afore-mentioned fluids and electricity are necessary for the operation of the handpiece.

In the latest standard handpieces, both the first body and the second house independent, air/watertight, tubes for the passage of the cleaning fluids (as well as cooling air) from the terminal to the instrument, where they are discharged through corresponding holes. This structure was designed to allow the easier, safer movement of the handpiece by the dental surgeon, as well as to allow the suitable, targeted distribution of the fluid within the work zone.

However, several operations, in particular those which are strictly surgical, necessitate a special handpiece, usually without internal tubes for the passage of the cooling liquids. There are various reasons for this technical decision: in some cases a passage which is totally "disposable" (used only once) is required for the cooling fluid, whilst in other situations the cooling liquid must be conducted directly into the stem of special instruments with longitudinal holes. Thus, the channel for the supply of the fluid cannot be that used in standard handpieces which, as already indicated, is integral with the second body of the handpiece then gives onto the first near the end of the latter.

However, for these surgical operations, only the liquid supply channel is required to be active, said liquid usually being the afore-mentioned physiological solution, with the exclusion of air, since the dental surgeon must always have a perfect view of the area of the mouth upon which he/she is operating, without the cleaning action creating undesired nebulisation or spray from the mixture.

Handpieces which obtain this (see also US patent 4.359.317), have been known for some time now, having a portion of supply channel integral with the outside of the first body near to the turbine and shaped so as to give onto the instrument or into the channel itself; this portion of channel is connected to a tube specially designed for the supply of physiological solution from either a special branch of the terminal or a branch independent of the handpiece, so as to by-pass the conventional air and water supply tubes.

As a result, in order to connect the handpiece to a standard motor with internal passages for cooling fluid supplied through the cord which connects it to the dental unit, the cooling fluid must be drawn upstream of the motor (that is to say, of the second body) and the tubes which pass inside the motor must be closed as the fluid enters the motor, given that they are not connected in water-tight fashion to corresponding tubes in the first body, to avoid unwanted leaks. To close the conventional tubes, the second body containing the micro-motor must be substituted with a "dedicated" body, that is to say, a body without internal tubes for the passage of fluids or, in any case, with the possibility of closing the tubes upstream of the second body. However, this solution is expensive and inconvenient for the dental surgeon, who mainly uses the standard micro-motors.

The object of the present invention is, therefore, to overcome the afore-mentioned disadvantages by creating an adapter for dental handpieces which is practical, safe and allows standard micro-motors to be used together with the operating parts of the handpieces for surgery in the oral cavity.

The technical features of the present invention, in accordance with the aforesaid objects, are clearly illustrated in the claims herein, and the advantages of the said features are more clearly described in the detailed description below, with reference to the accompanying drawings, which illustrate an embodiment by way of example only, and in which:
- figure 1 is an exploded perspective view of an adapter for dental handpieces applied to a handpiece for surgical operations;
- figure 2 is a front view of the device disclosed;
- figure 3 shows section III - III in figure 2;
- figure 4 shows section IV - IV in figure 3;
- figure 5 shows section V - V in figure 2;
- figure 6 shows section VI - VI in figure 2.

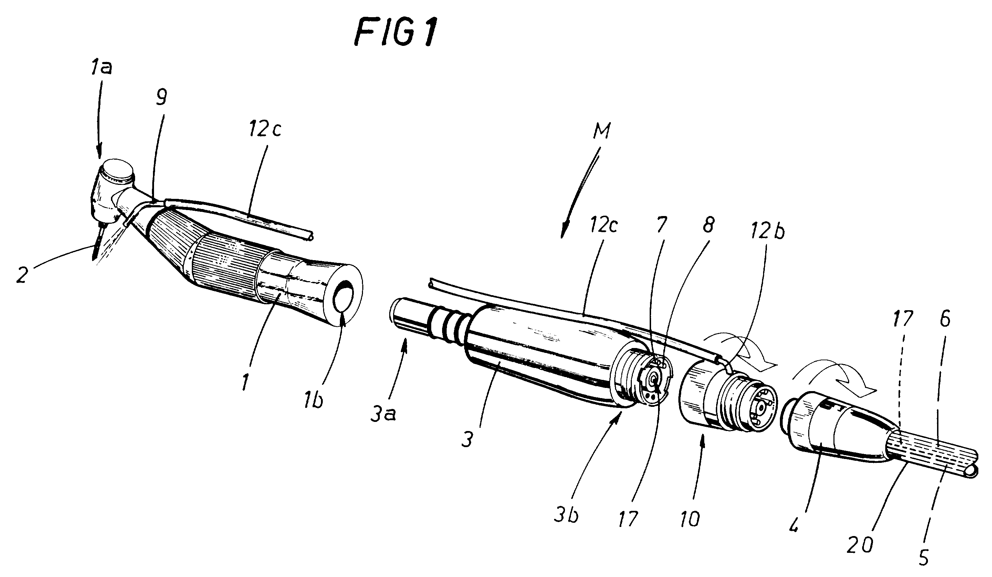

With reference to the accompanying drawings, and especially figure 1, the adapter can be applied to dental handpieces, in particular those handpieces indicated as a whole by the letter M, used for surgery in the oral cavity.

Again with reference to figure 1, these handpieces M include a first operating body 1 which at one end la has an instrument 2 (e.g.: a burr), and at the other end 1b can be stably connected, in the known manner, to the end 3a of a second body 3 which houses a micro-motor designed to drive the instrument 2.

The other end 3b of the second body 3 can, in turn, be connected to an end element 4 which forms part of a main tube 20 from, for example, a handpiece support tablet (not illustrated); two first tubes 5 and 6 (illustrated with dashed lines in figure 1) give onto the end element 4, said tubes respectively supplying air and water or physiological solution to the second body 3 which has respective second tubes 7 and 8 for the passage of the said fluids (the second tubes are partially illustrated). In the embodiment illustrated, the first body 1 also has a portion of tube 9 which runs outside it and gives onto the instrument 2. This portion of tube 9 is rigid and is fixed to the outside of the first body.

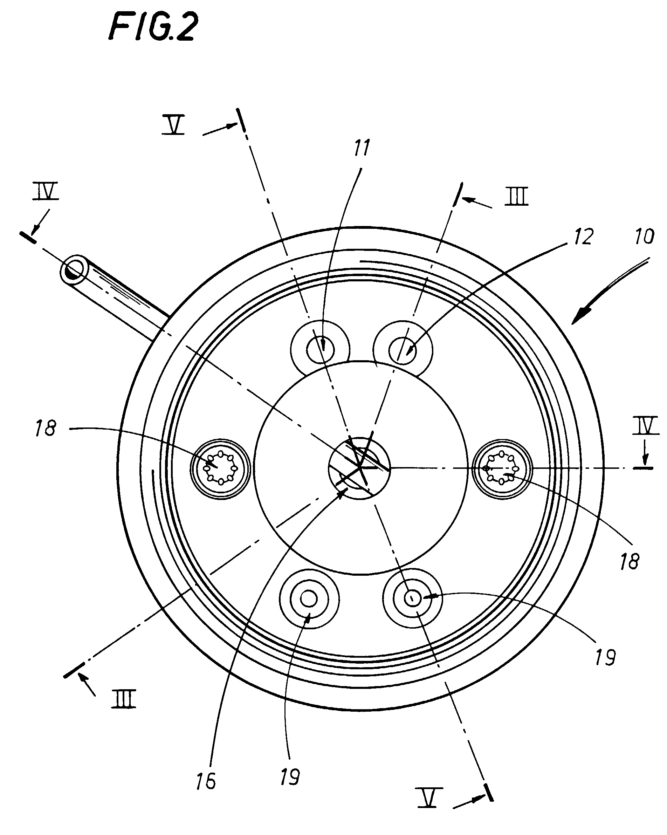

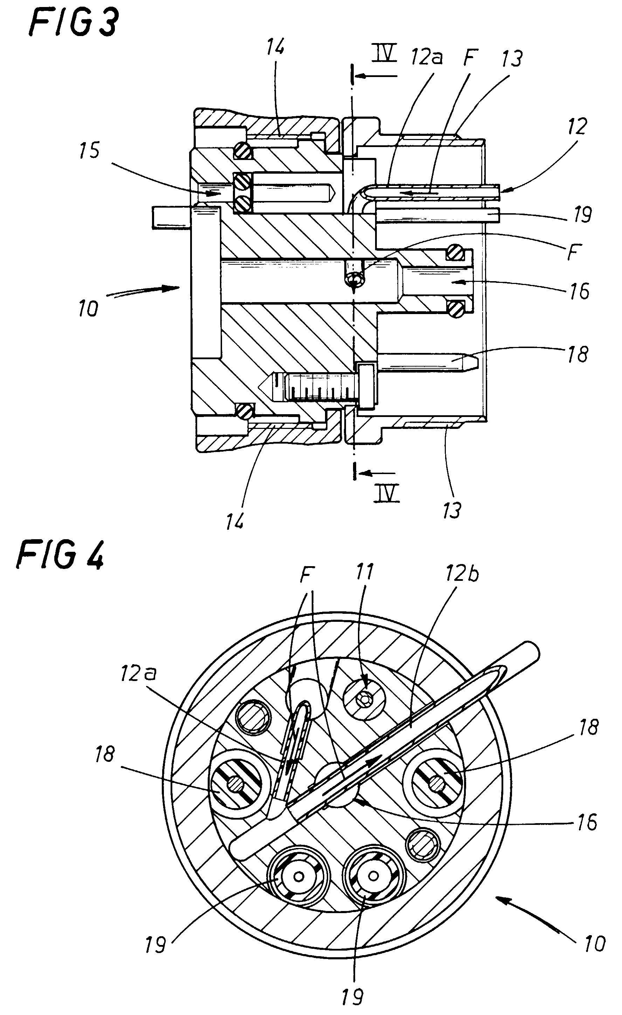

The embodiment illustrated (again, see figure 1), envisages an interface element 10 which can be positioned and locked between the end element 4 and the second body 3 so as to form an extension of the handpiece M. As shown also in figure 2, the element 10 is cylindrical in shape, so that it forms an ergonomic extension of the handpiece M and at the surface opposite the end element 4 (see figures 3, 4 and 5) houses a third blind tube 11 which can be coaxially connected to the first tube 5 for the supply of air from the end element 4 and a fourth tube 12 which can be connected to the corresponding first tube 6 for the supply of water or physiological solution.

The fourth tube 12 extends from the inside to the outside of the element 10 so that it is connected to the afore-mentioned portion of tube 9 integral with the outside of the first body 1. In this way, the passage of air (not used during surgery) is blocked and the conventional internal water or physiological solution channels are by-passed.

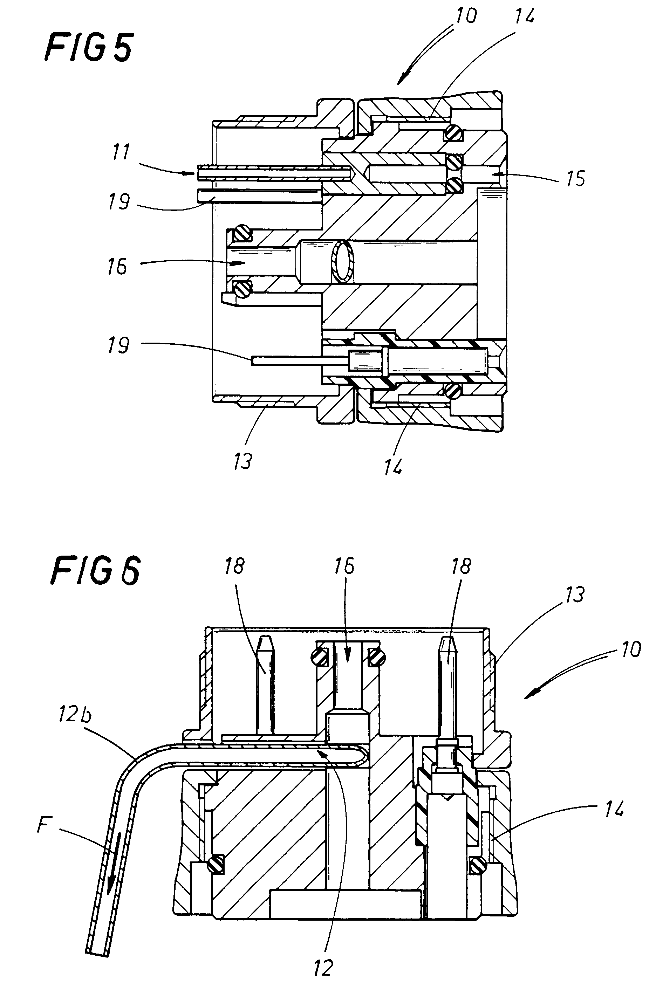

To allow this external connection, the fourth tube 12 is divided into two branches 12a and 12b (see figures 3, 4 and 6): the first branch 12a (see figure 3) is connected to the outside with the first tube 6 of the end element 4, whilst the second branch 12b, onto which the first branch gives, starts inside the element 10 and exits it radially (see figure 6). Outside the element 10, the second branch 12b has the shape of a right-angle pointing towards the second body 3 when fitted; the branches 12a and 12b are normally rigid, whilst the portion 12c which connects the second branch 12b to the end portion of tube 9 may be flexible (the path followed by the water or physiological solution is indicated by the arrow F).

More specifically, the element 10 also has first 13 and second 14 means for its connection respectively to the end element 4 and the second body 3: in the embodiment illustrated, these means take the form of threading which can be screwed onto threading on the end element 4 (internal) and the second body 3 (external).

For a correct connection to the second body 3, the surface of the element 10 opposite the second body 3 has two sixth blind tubes 15 (visible in figures 3 and 5) which can be connected to the corresponding second tubes 7 and 8, respectively for air and water or physiological solution. As well as these tubes, the element 10 also has a seventh, central through tube 16 which connects the relative channels 17 of the end element 4 and the second body 3 for the passage of cooling air for the micro-motor.

As well as these tubes for the passage of fluids, the structure of the element 10 is made more complete by the presence of both first contacts 18 and second contacts 19: both of these units extend on both sides of the element 10 and allow the passage of the relative electrical signals, those of the first contacts 18 powering the micro-motor, whilst the second contacts 19 allow the lighting of a bulb (not illustrated) on optic fibres for lighting the handpiece, if the latter is fitted with this item, said signals travelling from the end element 4 to the second body 3, the contacts being opposite the corresponding sockets (not illustrated).

Both the tubes described above and the contacts are positioned radially on the two interface surfaces of the element relative to the channel for the passage of air positioned along a longitudinal axis of extension of the element.

In order to perform surgery, the dental surgeon simply connects, by screwing into place, the end element 4 to the interface element 10 and the latter to the second body 3; the fourth tube 12, which exits the element 10, is then connected to the rigid portion of tube 9 integral with the first body 1 of the handpiece M by means of the flexible tube 12c.

The device described, therefore, fulfils the objects thanks to a system which interfaces the end element and second body which is simple and easily applied to the handpieces, allowing the use of standard micro-motors for surgery. The element disclosed allows the use of standard supply terminals, making use of the handpieces rational and economical and facilitating the dental surgeon's work.

## Claims

1. An adapter for dental handpieces, in particular for handpieces (M) used for surgery in the oral cavity; said handpieces (M) including a first operating body (1), one end (1a) of which is fitted with an instrument (2) and the other end (1b) of which can be stably connected to the end (3a) of a second body (3) which houses a micro-motor designed to drive the said instrument; it being possible to connect said second body (3), in turn, to an end element (4) having at least two first tubes (5, 6) respectively for the supply of air and water or physiological solution to the second body (3) which has second tubes (7, 8) for the passage of the said fluids, said first body (1) also having a portion of tube (9) positioned on its outer surface and giving onto the instrument (2), characterised in that it envisages an interface element (10) which can be positioned and locked between the end element (4) and the second body (3) to form an extension of the handpiece (M); the element (10) housing, at the surface opposite the end element (4), at least one third blind tube (11) which can be coaxially connected to the first tube (5) for the supply of air from the end element (4) and a fourth tube (12) which can be connected to the first tube (6) for the supply of water or physiological solution; said fourth tube (12) extending from inside to outside the element (10) so that it can be connected to the portion of tube (9) integral with the outside of the first body (1).

2. The device as described in claim 1, characterised in that the outside of the element (10) is cylindrical in shape and it has first (13) and second (14) means for its connection respectively to the end element (4) and the second body (3).

3. The device as described in claim 1, characterised in that the surface of the element (10) opposite the second body (3) has two sixth blind tubes (15) which can be connected to the corresponding second tubes (7, 8) respectively for air spray and water or physiological solution.

4. The device as described in claim 1, characterised in that the element (10) has a seventh, central through tube (16) designed to connect the channels (17) of the end element (4) and second body (3) for the passage of cooling air for the micro-motor.

5. The device as described in claim 1, characterised in that the fourth tube (12) is substantially divided into two branches (12a, 12b), the first (12a) connected externally and directly to the first tube (6) of the end element (4), and the second (12b) starting inside the element (10) and exiting it radially.

6. The device as described in claim 5, characterised in that on the outside of the element (10), the second branch (12b) has a right-angle shape pointing towards the second body (3).

7. The device as described in claim 1, characterised in that the element (10) has first contacts (18) extending on both sides, for the passage of a first electrical signal, these contacts being opposite both the end element (4) and the second body (3).

8. The device as described in claim 1, characterised in that the element (10) has second contacts (19) extending on both sides, for the passage of a second electrical signal, these contacts (19) being opposite both the end element (4) and the second body (3).

## Patentansprüche

1. Zwischenstück für dentale Handstücke, insbesondere für Handstücke (M), die bei chirurgischen Eingriffen in der Mundhöhle verwendet werden; wobei die genannten Handstücke (M) einen ersten Arbeitskörper (1) enthalten, dessen eines Ende (1a) mit einem Instrument (2) verbunden ist, und dessen anderes Ende (1b) fest an das Ende (3a) eines zweiten Körpers (3) angeschlossen werden kann, welcher einen Mikro-Motor enthält, dazu bestimmt, das genannte Instrument anzutreiben; wobei es möglich ist, den genannten zweiten Körper (3) wiederum an ein Endstück (4) anzuschliessen, das wenigstens zwei erste Leitungen (5, 6) jeweils für die Zufuhr von Luft und Wasser oder einer physiologischen Lösung an den zweiten Körper (3) aufweist, welcher zweite Leitungen (7, 8) für den Durchlass der genannten Flüssigkeiten hat, wobei der genannte erste Körper (1) ebenfalls einen Leitungsabschnitt (9) enthält, angeordnet an seiner äusseren Oberfläche und an dem Instrument (2) mündend, **dadurch gekennzeichnet**, dass es ein Schnittstellenelement (10) vorsieht, welches zwischen dem Endstück (4) und dem zweiten Körper (3) eingesetzt und blockiert werden kann, um eine Verlängerung des Handstückes (M) zu bilden; wobei das Element (10) an der dem Endstück (4) gegenüberliegenden Fläche mit wenigstens einer dritten blinden Leitung (11) versehen ist, welche koaxial an die erste Leitung (5) zum Zuführen von Luft von dem Endstück (4) angeschlossen werden kann, und mit einer vierten Leitung (12), welche an die erste Leitung (6) zum Zuführen von Wasser oder einer physiologischen Lösung angeschlossen werden kann; wobei sich die genannte vierte Leitung (12) von innen her nach ausserhalb des Elementes (10) erstreckt, so dass es an den fest mit der Aussenseite des ersten Körpers (1) verbundenen Leitungsabschnitt (9) angeschlossen werden kann.

2. Vorrichtung wie in Patentanspruch 1 beschrieben, **dadurch gekennzeichnet**, dass die Aussenseite des Elementes (10) eine zylindrische Form aufweist und erste (13) und zweite (14) Mittel für seinen Anschluss an jeweils das Endstück (4) und den zweiten Körper (3) hat.

3. Vorrichtung wie in Patentanspruch 1 beschrieben, **dadurch gekennzeichnet**, dass die dem zweiten Körper (3) gegenüberliegende Fläche des Elementes (10) zwei sechste blinde Leitungen (15) aufweist, welche an die entsprechenden zweiten Leitungen (7, 8) jeweils zum Zuführen von Luft und Wasser oder einer physiologischen Lösung angeschlossen werden können.

4. Vorrichtung wie in Patentanspruch 1 beschrieben, **dadurch gekennzeichnet**, dass das Element (10) eine siebente, mittlere und durchgehende Leitung (16) hat, dazu bestimmt, die Kanäle (17) des Endstückes (4) und des zweiten Körpers (3) zum Durchlass von Kühlluft für den Mikro-Motor miteinander zu verbinden.

5. Vorrichtung wie in Patentanspruch 1 beschrieben, **dadurch gekennzeichnet**, dass die vierte Leitung (12) im wesentlichen in zwei Abzweigungen (12a, 12b) aufgeteilt ist, von denen die erste (12a) aussen und direkt an die erste Leitung (6) des Endstückes (4) angeschlossen ist und die zweite (12b) vom Inneren des Elementes (10) ausgeht und radial aus diesem austritt.

6. Vorrichtung wie in Patentanspruch 5 beschrieben, **dadurch gekennzeichnet**, dass an der Aussenseite des Elementes (10) die zweite Abzweigung (12b) eine rechtwinklige Form aufweist und in Richtung des zweiten Körpers (3) zeigt.

7. Vorrichtung wie in Patentanspruch 1 beschrieben, **dadurch** **gekennzeichnet**, dass das Element (10) erste, sich beiderseitig erstreckende Kontakte (18) für den Durchlauf eines ersten elektrischen Signals aufweist, wobei diese Kontakte dem Endstück (4) und dem zweiten Körper (3) zugewandt sind.

8. Vorrichtung wie in Patentanspruch 1 beschrieben, **dadurch gekennzeichnet**, dass das Element (10) zweite, sich beiderseitig erstreckende Kontakte (19) für den Durchlauf eines zweiten elektrischen Signals aufweist, wobei diese Kontakte dem Endstück (4) und dem zweiten Körper (3) zugewandt sind.

## Revendications

1. Adaptateur pour pièces à main dentaires, en particulier pour pièces à main (M) utilisées pour des opérations chirurgicales dans la cavité orale ; lesdites pièces à main (M) comprenant un premier corps opérationnel (1), dont une extrémité (1a) est équipée d'un instrument (2) et dont l'autre extrémité (1b) peut être associée de façon stable avec l'extrémité (3a) d'un deuxième corps (3) qui loge un micro-moteur destiné à actionner ledit instrument ; ledit deuxième corps (3) pouvant être associé à son tour avec un élément terminal (4) ayant au moins deux premiers conduits (5, 6) destinés à alimenter, respectivement, de l'air et de l'eau ou une solution physiologique à ce même deuxième corps (3) qui présente des deuxièmes conduits (7, 8) destinés au passage des fluides en question, ledit premier corps (1) présentant également sur sa surface extérieure une portion de conduit (9) débouchant au niveau de l'instrument (2), caractérisé en ce qu'il prévoit un élément d'interface (10) qui peut être positionné et bloqué entre l'élément terminal (4) et le deuxième corps (3) pour former un prolongement de la pièce à main (M) ; ledit élément (10) logeant, au niveau de la surface opposée à l'élément terminal (4), au moins un troisième conduit borgne (11) qui peut être coaxialement raccordé au premier conduit (5) pour l'alimentation d'air provenant de l'élément terminal (4) et un quatrième conduit (12) qui peut être raccordé au premier conduit (6) pour l'alimentation d'eau ou d'une solution physiologique ; ledit quatrième conduit (12) s'étendant de l'intérieur à l'extérieur de l'élément (10) de sorte qu'il peut être raccordé à la portion de conduit (9) faisant partie intégrante du premier corps (1) à l'extérieur de ce dernier.

2. Dispositif selon la revendication 1, caractérisé en ce que ledit élément (10) a une conformation extérieure cylindrique et est pourvu de premier (13) et deuxième (14) moyens destinés à le raccorder, respectivement, à l'élément terminal (4) et au deuxième corps (3).

3. Dispositif selon la revendication 1, caractérisé en ce que ledit élément (10) est pourvu, sur la surface opposée au deuxième corps (3), deux sixièmes conduits borgnes (15) qui peuvent être raccordés aux deuxièmes conduits (7, 8) correspondants pour, respectivement, un spray d'air et d'eau ou de solution physiologique.

4. Dispositif selon la revendication 1, caractérisé en ce que ledit élément (10) a un septième conduit central débouchant (16) destiné à relier les canaux (17) de l'élément terminal (4) et le deuxième corps (3) pour le passage de l'air de refroidissement du micro-moteur.

5. Dispositif selon la revendication 1, caractérisé en ce que ledit quatrième conduit (12) est en substance divisé en deux branches (12a, 12b), la première branche (12a) étant raccordée extérieurement et directement au premier conduit (6) de l'élément terminal (4), et la deuxième branche (12b) partant à l'intérieur de l'élément (10) et sortant radialement de ce dernier.

6. Dispositif selon la revendication 5, caractérisé en ce que ladite deuxième branche (12b) présente, à l'extérieur de l'élément (10), une forme à angle droit orientée vers le deuxième corps (3).

7. Dispositif selon la revendication 1, caractérisé en ce que ledit élément (10) a des premiers contacts (18) s'étendant de chaque côté pour le passage d'un premier signal électrique, ces contacts étant opposés à l'élément terminal (4) et au deuxième corps (3).

8. Dispositif selon la revendication 1, caractérisé en ce que ledit élément (10) a des deuxièmes contacts (19) s'étendant de chaque côté pour le passage d'un deuxième signal électrique, ces contacts (19) étant opposés à l'élément terminal (4) et au deuxième corps (3).
